# EUROPÄISCHE PATENTSCHRIFT

(11) **EP 2 190 686 B1**
(45) Veröffentlichungstag und Bekanntmachung des Hinweises auf die Patenterteilung: **01.03.2017**
(21) Anmeldenummer: 08784601.0
(22) Anmeldetag: 02.07.2008
(51) Int. Cl.: G01D 7/02, B60K 37/06

(54) **KONFIGURIERBARES ANZEIGEINSTRUMENT**
CUSTOMIZABLE INDICATING INSTRUMENT
INSTRUMENT AFFICHEUR PERSONNALISABLE

(30) Priorität: 10.09.2007 DE 102007042649
(43) Veröffentlichungstag der Anmeldung: 02.06.2010
(73) Patentinhaber: Johnson Controls GmbH, 51399 Burscheid (DE)
(72) Erfinder: TUZAR, Gert-Dieter, 42799 Leichlingen (DE); WERNER, Christina, 42285 Wuppertal (DE); DEUBZER, Andreas, 50674 Köln (DE); DREISBACH, Volker, 50931 Köln (DE)
(74) Vertreter: Wolff, Felix
(86) Internationale Anmeldenummer: PCT/EP2008/005398
(87) Internationale Veröffentlichungsnummer: WO 2009/033518

(56) Entgegenhaltungen:
- EP-A- 1 526 029
- EP-A- 1 769 963
- DE-A1- 10 056 302
- US-A1- 2004 172 182
- US-A1- 2005 235 209

## Beschreibung

Die Erfindung betrifft ein Kombiinstrument mit mindestens einem ersten Bereich und einem zweiten Bereich, in denen jeweils fahrerrelevante Daten darstellbar sind.

Anzeigeinstrumente, die auf einem mit grafischen Darstellungsmittel, etwa einem Punktmatrix-Display, basierenden sind Stand der Technik und beispielsweise aus der DE 10 2005 035 481 A1 bekannt. Diese Displays weisen jedoch eine eingeschränkte Gestaltungsfreiheit auf und sind nur vergleichsweise schwierig handhabbar.

Weiter ist in der DE 100 56 302 A1 eine Anzeigevorrichtung beschrieben, in der Informationen für eine zentrale Anzeige mittels eines Bedienelements auswählbar und mittels einer Transfertaste zwischen der zentralen Anzeige und einer zusätzlichen Anzeige verschiebbar sind.

Es war deshalb die Aufgabe der vorliegenden Erfindung ein Kombinationsinstrument beziehungsweise ein Verfahren zur Konfigurierung von Kombinationsinstrumenten zur Verfügung zu stellen, die flexibel einfach zu handhaben sind.

Gelöst wird die Aufgabe mit einem Kombiinstrument gemäß Anspruch 1.

Erfindungsgemäß weist das Kombiinstrument ein Display, beispielsweise ein Thin Film Transistor TFT- oder LCD-Display auf. Dieses Display ist zumindest in einen ersten Bereich und in einen zweiten Bereich unterteilt, in denen jeweils Informationen für die Fahrzeuginsassen dargestellt werden können. Vorzugsweise schließen sich links- und rechtsseitig neben einem mittig angeordneten, ersten Bereich zwei weitere Darstellungsfelder, die zweiten Bereiche, an, wobei besonders bevorzugt die während der Fahrt unverzichtbare Geschwindigkeitsanzeige stets im ersten Bereich erfolgt. Vorzugsweise ist in dem ersten Bereich Fahrzeuginformation, wie beispielsweise die Geschwindigkeit, Assistenzinformation, wie beispielsweise Informationen vom Navigationssystem, vom Telefon und/oder vom Infotainmentsystem und/oder ein Warnhinweis darstellbar. Insbesondere dient der erste Bereich als Interaktionsdisplay zur Gestaltung des Kombinationsinstrumentes.

Im ersten Bereich können Informationen oder Informationsdarstellungen ausgewählt werden, die dann in dem zweiten Bereich abgelegt werden. Bei ruhendem Fahrzeug kann eine vollkommen andere Darstellungsart bevorzugt sein als bei fahrenden Fahrzeugen.

Der mindestens eine zweite Bereich kann unbelegt sein (leere Anzeige) oder er kann eine Anzeige darstellen, die ihm über das mittlere, zentrale Darstellungsfeld zugeordnet worden ist.

Der erste Bereich weist einen interaktive Auswahlbereich aufweist, mit dem auswählbar ist, welche Information beispielsweise über Fahrzeugfunktionen und oder Assistenzfunktionen zumindest in Teilbereichen des Interaktionsdisplays sichtbar ist. Vorzugsweise befindet sich der Auswahlbereich im unteren Teil des ersten Bereichs, in dem geringer Informationswettbewerb herrscht. In dem Auswahlbereich sind verschiedene Informationen über Fahrzeugfunktionen und/oder Assistenzfunktionen aneinandergereiht, die ausgewählt werden können und dann insbesondere vergrößert in dem ersten Bereich sichtbar sind. Besonders bevorzugt ist dann das Abbild dieser Information von dem ersten Bereich, dem Interaktionsdisplay, in den zweiten Bereich, den Ablagebereich, verschiebbar und wird dort abgelegt, so dass die Information dort sichtbar ist, bis eine andere Information von dem Nutzer ausgewählt wird und/oder keine Anzeige in diesem Bereich erfolgen soll. Für den Fall, dass zwei oder mehr Ablagebereiche vorhanden sind, kann der Nutzer entscheiden, in welchen Ablagebereich die Information abgelegt wird.

Vorzugsweise verhindert das erfindungsgemäße Kombiinstrument, dass in einem der Bereiche dieselbe Information doppelt dargestellt wird. Dies kann beispielweise dadurch erfolgen, dass Informationen, die bereits dargestellt sind automatisch von der Anzeige entfernt werden, sobald der Nutzer sie noch einmal ausgewählt hat.

Weiterhin ist das erfindungsgemäße Kombinationsinstrument so konfiguriert, dass Wamhinweise immer sofort, insbesondere im ersten Bereich dargestellt werden, auch wenn der Nutzer gerade mit dem Kombiinstrument interagiert. Der Wamhinweise ist insbesondere so lange in diesem Bereich sichtbar bis er vom Nutzer quittiert wird. Danach kann er verkleinert und/oder in einem anderen Bereich sichtbar bleiben, bis der Grund der Warnung behoben worden ist.

Das Kombiinstrument weist ein Eingabemittel auf, mit dem die in dem Interaktionsdisplay gezeigte Information, auswählbar ist. Mit dem Eingabemittel wird demnach von dem Nutzer ausgesucht, welche Information in dem ersten Bereich sichtbar ist. Das Eingabemittel umfasst einen Dreh-Drück-Knopf. Mit dem Drehschalter kann durch die unterschiedlichen Informationen gescrollt werden, die beispielsweise in dem Anzeigebereich sichtbar sind. Durch Drücken des Eingabemittels wird die jeweilige Information ausgewählt und ist dann vorzugsweise vergrößert, besonders bevorzugt in dem ersten Bereich sichtbar. Dort kann sie dann verbleiben oder in den zweiten Bereich verschoben werden.

Dafür weist das Eingabemittel einen Verteiler auf, mit dem die im Interaktionsdisplay gezeigte Information in den Ablagebereich verschiebbar ist. Bei diesem Verteiler handelt es sich beispielsweise um einen Druckschalter. Vorzugsweise ist jedem zweiten Bereich ein Verteiler zugeordnet. Sobald der Verteiler betätigt wird, wird die im ersten Bereich gezeigte Information in den zweiten Bereich verschoben. Der erste Bereich ist danach dann zumindest teilweise leer oder die davor gezeigte Information wird wieder sichtbar.

Erfindungsgemäß wird in dem Interaktionsdisplay mindestens eine Information ausgewählt, die dann in dem Kombiinstrument angezeigt werden soll. Bei der Information kann es sich beispielsweise um eine Drehzahlanzeige, Navigationssystem-Informationen, Audio-Informationen, Informationen, die ein Bordcomputer zur Verfügung stellt und/oder Telefoninformationen etc. handeln.

Sobald diese Information ausgewählt worden ist, wird sie im ersten Bereich dargestellt und sofern sie dem Nutzer beliebt in den mindestens einen Ablagebereich verschoben, wo sie sichtbar bleibt, bis der Nutzer eine andere Information oder keine Information für diesen Bereich auswählt. Dieser Vorgang kann beliebig oft wiederholt werden.

Die Auswahl erfolgt mit einem Eingabemittel durch Drehen und Drücken.

In Folgenden werden die Erfindungen anhand des bei konventionellen Anzeigeinstrumenten weit verbreiteten, dreiteiligen Darstellungsschemas erläutert, bei dem sich links- und rechtsseitig neben dem mittig angeordneten, wichtigsten Zentralinstrument zwei weitere Darstellungsfelder anschließen, wobei die unverzichtbare Geschwindigkeitsanzeige stets durch das Zentralinstrument erfolgt. Der mittig angeordnete Bereich ist der erste Bereich und die recht und links angeordneten Anzeigen die zweiten Bereiche im Sinne der Erfindung. Der Fachmann erkennt, dass die hier gemachten Ausführungen für den Fahrbetrieb Gültigkeit haben; bei ruhendem Fahrzeug kann eine vollkommen andere Darstellungsart bevorzugt sein.

Die seitlichen Darstellungsfelder können unbelegt sein (leere Anzeige) oder sie können eine zugewiesene Anzeige darstellen, die ihnen über das mittlere, zentrale Darstellungsfeld zugeordnet worden ist. Zu diesem Zweck weist die Gruppe von Bedienelementen zwei beidseitig einer zentral positionierten Auswahlvorrichtung angeordnete Zuweisungsvorrichtungen, bevorzugt als Drucktaster ausgebildet, auf. Die Zuweisung einer Anzeigefunktion geschieht in einem mehrschrittigen Prozess. Im ersten Schritt wird eine Funktion aus einer angebotenen Menge von Funktionen vorausgewählt. Dazu ist es bevorzugt, sämtliche auswählbaren Funktionen durch jeweils ein Symbol dem Fahrer in permanenter Darstellung anzubieten, wobei die Funktionen hierarchiegleich verknüpft sind. Insbesondere können die Symbole beispielsweise äquidistant auf einem ringförmigen Grafikelement positioniert sein, welches in der Außenzone des zentralen Darstellungsbereiches permanent gezeigt wird. Durch eine Drehbewegung der zentralen Auswahlvorrichtung der Bedienelemente-Gruppe wird eine entsprechende Drehung des ringförmigen Grafikelementes initiiert, die der Bediener so lange fortsetzt, bis die gewünschte Funktion in Überdeckung zu einer an einer festen Position des zentralen Darstellungsbereiches positionierten Auswahlmarkierung steht. Von Vorteil ist es, die jeweilige Funktion dabei herausgehoben darzustellen, etwa durch eine Farbkennzeichnung oder durch eine vergrößerte Darstellung; der Auswahlmarkierung wäre dabei insoweit bevorzugt eine Lupenfunktion zuzusprechen. Der Prozess-Schritt der Vorauswahl wird vervollständigt durch eine Bestätigungshandlung. Dafür ist, der Intuition des Bedieners entgegenkommend, ein Druck auf die zentrale Auswahlvorrichtung gut geeignet.

Durch Abschluss der Vorwahl wird die Anzeigefunktion zunächst der Mittelzone des zentralen Darstellungsbereiches zugewiesen, wo sie zumindest vorübergehend zur Darstellung gebracht wird. Falls innerhalb einer ab diesem Moment startenden Zeitintervalls keine weitere Bedienhandlung ausgeführt wird, hat dies zur Folge, dass der Status der Vorauswahl für diese Funktion selbsttätig gelöscht wird; als Folge davon kehrt der zentralen Darstellungsbereich vorzugsweise in den zuvor bestehenden Ausgangszustand zurück. Sofern eine andere Anzeigefunktion vorher eingestellt war, wird diese vorzugsweise wieder sichtbar, ansonsten wird vorzugsweise der Grundzustand eingenommen. Vorzugsweise ist dies die vollflächige Anzeige eines Geschwindigkeitsinstruments, wobei vorzugsweise eine randseitige Darstellung der Geschwindigkeit für jeden möglichen Konfigurationszustand stets vorhanden ist.

Optional wird im nächsten Schritt die Funktion durch Betätigen eines der seitlichen Bedienelemente dem korrespondierenden seitlichen Darstellungsbereich zugewiesen. Als Folge "wandert" die Anzeige von dem zentralen Darstellungsbereich dorthin, wo sie solange aktiv bleibt, bis der Bediener eine weitere Konfigurationshandlung vornimmt. Dies kann ein Überschreiben der Anzeigefunktion im seitlichen Darstellungsbereich durch eine andere Anzeigefunktion sein, die in vorstehend beschriebener Weise als Neuzuweisung vom zentralen Darstellungsbereich her erfolgt, oder eine Aufhebung der Anzeigefunktion im seitlichen Darstellungsbereich durch Vornahme einer weiteren Auswahlhandlung im zentralen Darstellungsbereich, die auf dieselbe, bereits angezeigte Funktion gerichtet ist. Sie kann hernach dem gegenüberliegenden seitlichen Darstellungsbereich zugewiesen werden, oder ihre Darstellung im Anzeigeinstrument endet nach Ablauf des oben erwähnten Zeitintervalls selbsttätig.

Neben der auf die seitlichen Darstellungsbereiche gerichteten Konfiguration kann auch der zentrale Darstellungsbereich für die dauerhafte Darstellung einer Anzeigefunktion konfiguriert werden. In diesem Fall tritt als abschließender Schritt des Auswahlprozesses die Bestätigung der Vorauswahl mit Wirkung für den zentralen Darstellungsbereich, bevorzugt in Form eines weiteren Drucks auf das zentrale Bedienelement.

In einer bevorzugten Ausführungsform ist es vorgesehen, dass Wammeldungen in der Mittelzone des zentralen Darstellungsbereichs bei Bedarf selbsttätig zur Anzeige kommen und ihre weitere Behandlung im Kontext der geschilderten Konfigurationsmöglichkeiten erfolgt. Diese können einem der seitlichen Darstellungsbereiche zugewiesen werden, um dauerhaft im Sichtfeld des Fahrzeugführers zu bestehen, oder es kann durch eine als Quittierung angelegte Bedienhandlung vorübergehend oder dauerhaft ihre weitere Darstellung unterbunden werden.

In einer weiteren bevorzugten Ausführungsform ist die Zuweisung einer Funktion an einen der seitlichen Darstellungsbereiche mit der Errichtung einer Verknüpfung zu auf diese Funktion bezogenen, weiteren Bedienelementen verbunden. Dies kann etwa eine Abstandswarneinrichtung oder eine automatische Geschwindigkeitsregelung betreffen, die durch Aufruf der entsprechenden Darstellung aktiv werden, und auf deren Parametrierung man in der Folge Einfluss nehmen können muss.

Im Folgenden wird die Erfindung anhand der Figuren erläutert. Diese Erläuterungen sind lediglich beispielhaft und schränken den allgemeinen Erfindungsgedanken nicht ein. Die Erläuterungen gelten für das erfindungsgemäße Kombiinstrument und das erfindungsgemäße Verfahren gleichermaßen.

Es zeigen:
- **Figur 1:**: ein Layout des zentralen und der beiden ihn umgebenden Darstellungsbereiche,
- **Figur 2:**: eine mögliche Ansicht, bei der allen drei Darstellungsbereichen Darstellungsfunktionen zugeweisen sind,
- **Figur 3:**: das Eingabemittel,
- **Figur 4:**: Einzelheiten des ersten Bereichs,
- **Figur 5:**: Prozesschritte der Zuweisung einer Darstellungsfunktion von dem zentralen Darstellungsbereich an den linksseitigen Darstellungsbereich,
- **Figur 6:**: die Auswahl der Anzeige,
- **Figur 7:**: Beispielkonfigurationen,
- **Figur 8:**: die Darstellung von Wamhinweisen,
- **Figur 9:**: das Auswahlverfahren,
- **Figur 10:**: das Interaktionsdisplay,
- **Figur 11:**: die Verteilung der Information,
- **Figur 12:**: die Vermeidung von Doppelbelegungen,
- **Figur 13:**: zeigt das Verhalten des Systems bei ausbleibender Bestätigung.

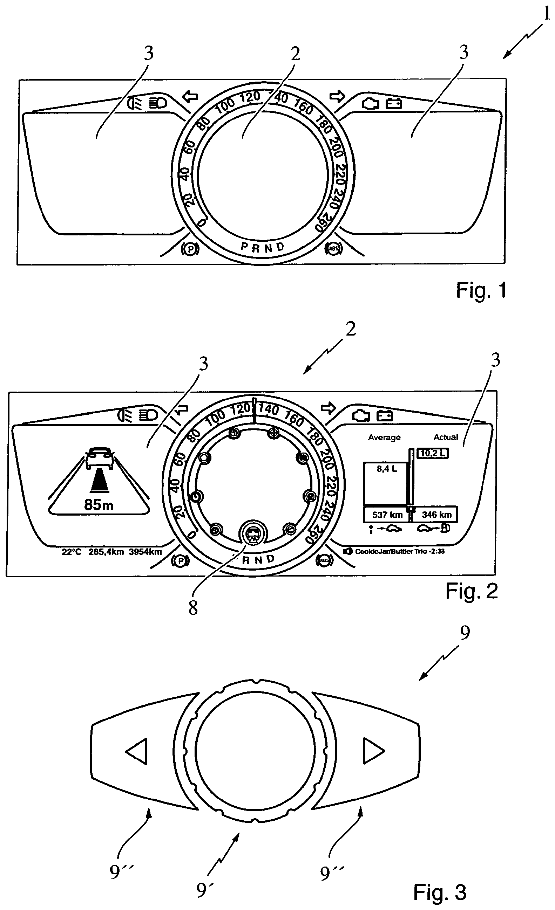

Figur 1 zeigt das erfindungsgemäße Kombidisplay, das einen ersten Bereich 2 sowie rechts und links davon einen zweiten Bereich 3 aufweist. In dem ersten Bereich 2 ist ringförmig eine Geschwindigkeitsanzeige angeordnet, wobei der Zeiger nicht dargestellt ist. Der erste Bereich 2 dient als Interaktionsdisplay sowie für die Anzeige von gewünschten Informationen und die zweiten Bereiche 3 als Ablagebereiche für gewünschte Informationen. Der Fachmann versteht, dass die Informationen in der Regel nicht statisch sind und sich verändern.

Figur 2 zeigt das Kombiinstrument gemäß Figur 1, in dem im ersten Bereich 2 zusätzlich ein Auswahlbereich 8 dargestellt ist, dessen Funktion im weiteren noch näher erläutert wird. Außerdem sind in den Ablagenbereichen 3 in der vorliegenden Darstellung Informationen abgelegt. Der linke Ablagebereich 3 zeigt eine Abstandsanzeige, während im rechten Ablagebereich der aktuelle und der durchschnittliche Benzinverbrauch sowie die noch mit der vorhandenen Tankfüllung zurücklegbare Strecke dargestellt ist.

Figur 3 zeigt ein Eingabemittel 9, das in dem vorliegenden Fall aus einem Dreh-Drück-Knopf 9' sowie zwei Verteilern 9" besteht. Mit dem Eingabemittel insbesondere mit dem Dreh-Drück-Knopf 9', kann ausgewählt werden, welche Informationen in dem ersten Bereich 2 dargestellt wird. Mit den Verteilern 9" kann die Information von dem ersten Bereich 2 auf den rechten bzw. linken Ablagebereich 3 verteilt werden.

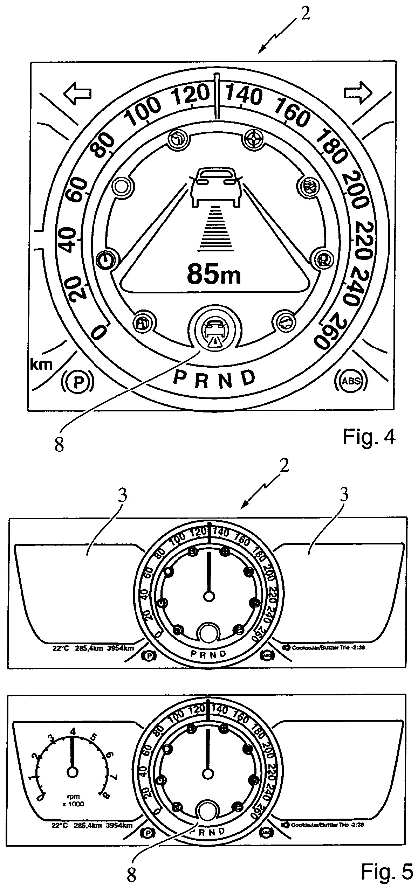

Figur 4 zeigt ein Detail des ersten Bereiches 2, dem Interaktionsdisplay. Zu sehen ist der Auswahlbereich 8 in Form eines Rings mit neun Symbolen, mit denen unterschiedliche Funktionen abgerufen werden können und die ausgewählt werden können. Im Bereich 6 Uhr, d. h. im unteren Bereich des Interaktionsdisplays 2 ist das Symbol eines Abstandsregelungstempomat vergrößert und gegebenenfalls beleuchtet hervorgehoben. Diese Darstellung verdeutlich dem Nutzer, dass dieses Symbol ausgewählt werden kann beispielsweise durch Drücken des Dreh-Drück-Knopfs 9', was in dem vorliegenden Fall auch erfolgt ist, weil die Informationen des Abstandsregelungstempomates im Bereich 2 vergrößert zu sehen ist. Die einzelnen Symbole können durch Drehen des Dreh-Drück-Knopfs 9' im und gegen den Uhrzeigersinn in die sechs-Uhr-Stellung gebracht und durch Drücken des Knopfs 9' ausgewählt und durch zur vergrößerten Darstellung im Bereich 2 gebracht werden.

Figur 5 zeigt die Verfahrensschritte der Auswahl und Ablage von Informationen. Im oberen Bereich von Figur 5 ist in dem Interaktionsdisplay 2 ein Drehzahlregler durch Drehen und Drücken des Dreh-Drück-Knopfs 9' ausgewählt worden. So dann ist der linke Verteiler 9" gedrückt worden, so dass sich der Drehzahlmesser in den linken Ablagebereich 3 verschiebt. Der Drehzahlmesser ist somit in dem Interaktionsdisplay 2 nicht mehr zu sehen, so dass dieses für Auswahl von weiteren Informationen genützt werden kann.

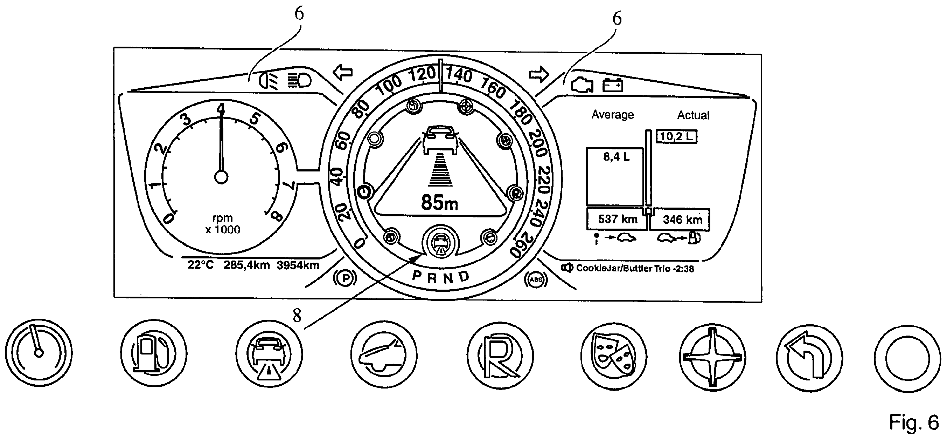

Figur 6 zeigt eine weitere Darstellung des erfindungsgemäßen Kombiinstrumentes. In diesem Fall ist zusätzlich dargestellt, dass das Kombiinstrument noch Fahrzeugkontrollsymbole 6 wie beispielsweise Licht, Abblendlicht, Öldruck sowie die Batteriefunktion aufweisen kann. Des Weiteren können auch zusätzliche Informationen über das Infotainmentsystem, die Außentemperatur, ein Tageskilometerzähler sowie die insgesamt gefahrene Kilometerzahl dargestellt werden. Noch einmal ist zu sehen, dass innerhalb der Geschwindigkeitsanzeige ringförmig neun Symbole in dem Anzeigebereich 8 dargestellt sind, die in der sechs-Uhr-Stellung angewählt werden können. Die Symbole sind in der sechs-Uhr-Stellung vergrößert und/oder beleuchtet dargestellt, was dem Nutzer symbolisiert, dass er sie anwählen kann. Im unteren Teil sind die Symbole vergrößert dargestellt.

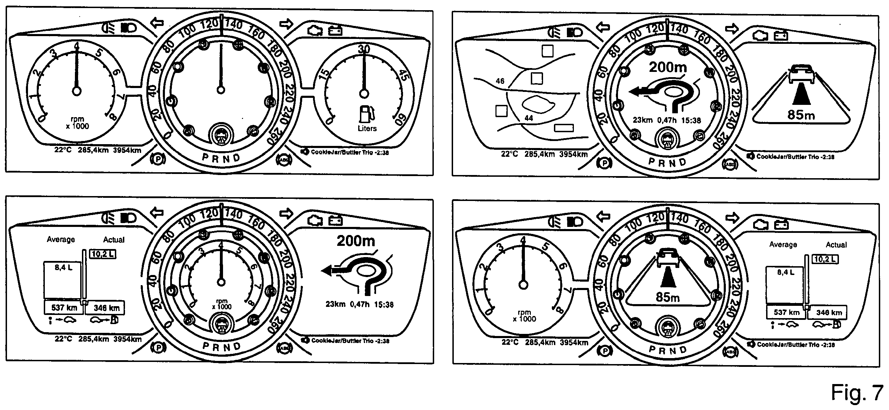

Figur 7 zeigt vier mögliche Konfigurationen des erfindungsgemäßen Kombiinstrumentes. In der oberen linken Darstellung ist im ersten Bereich 2, dem Interaktionsdisplay, keine Informationen vorgesehen, während der linke Ablagebereich 3 die Drehzahl und der rechte Ablagebereich 3 den Füllstand des Tanks zeigt. In der oberen rechten Darstellung ist in dem ersten Bereich 2 die Richtungsanweisung des Navigationssystems dargestellt. In dem linken Ablagebereich 3 ist eine Straßenkarte und in dem rechten Ablagebereich 3 Informationen über den Abstand gezeigt. In der linken unteren Darstellung ist im ersten Bereich 2 die Drehzahl, im linken Ablagebereich 3 der durchschnittliche Benzinverbrauch sowie der aktuelle Benzinverbrauch und die damit noch zur Verfügung stehenden mit der vorhandenen Tankfüllung zu fahrenden Kilometer sowie im rechten Ablagebereich Details der zu fahrenden Route gezeigt. Die rechte untere Darstellung zeigt im ersten Bereich 2 Informationen über den Abstand während die linke Darstellung die Drehzahl und die rechte Darstellung den soeben geschilderten Benzinverbrauch darstellt. Der Fachmann versteht, dass das erfindungsgemäße Kombiinstrument demnach beliebig konfigurier- und veränderbar ist. Alle Informationen können in allen Bereich 2, 3 dargestellt werden. Sie werden in dem ersten Bereich 2 ausgewählt und dort dargestellt und/oder in den zweiten Bereich verschoben.

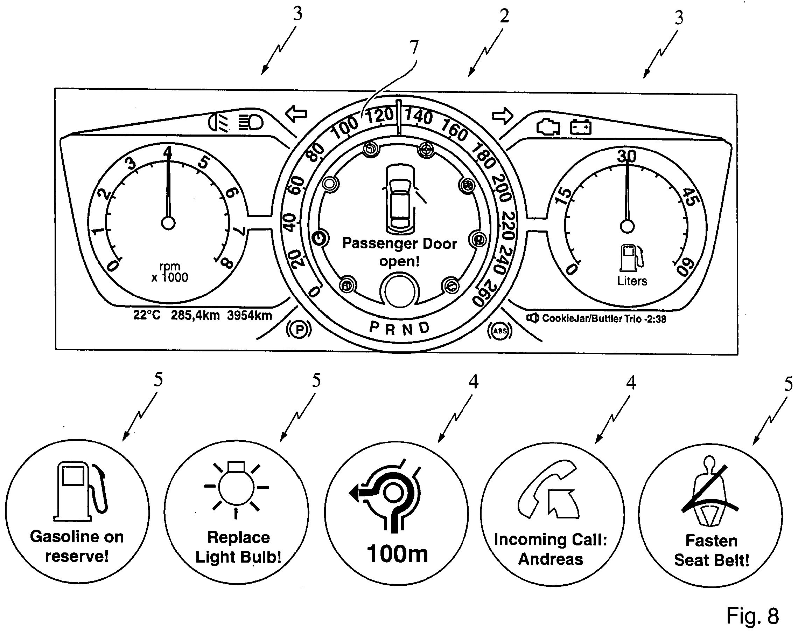

In Figur 8 ist die Darstellung von Hinweisen mit einer hohen Priorität gezeigt. Alle fahrzeugrelevanten Meldungen mit hoher Priorität wie Warnung und Hinweise überschreiben, zumindest über eine gewisse Zeitspanne, die aktuellen Informationsgehalte im ersten Bereich 2 und lassen für diese Zeitspanne keine weiteren Aktionen in diesem Bereich zu. Somit wird die Aufmerksamkeit des Fahrers ausschließlich auf wichtige Ereignisse gelenkt. Diese Informationen können entweder quittiert werden und verschwinden somit oder sie können quittiert und in einen der Ablagebereiche transportiert werden.

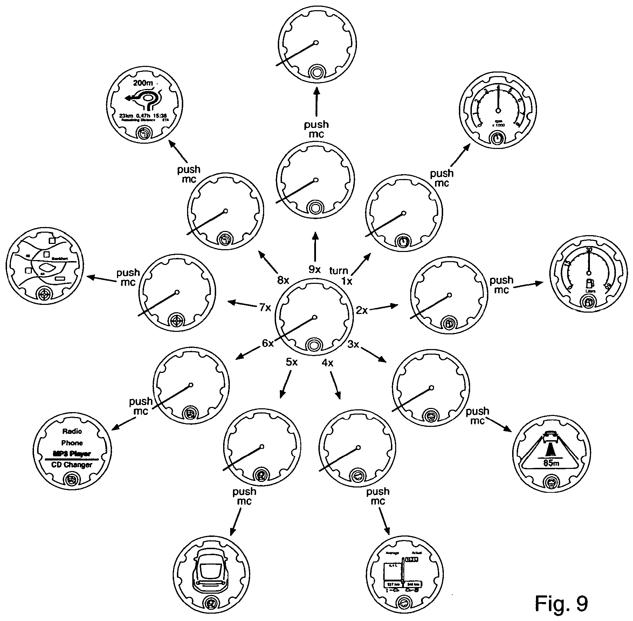

Figur 9 zeigt das Verfahren zur Auswahl von Informationen auf dem Interaktionsdisplay. Generell wird durch Drehen am Knopf 9' die gewünschte Information aus dem Auswahlbereich 8 ausgewählt und durch Drücken dieses Knopfes, dessen Ansicht aufgerufen. Die Ausgangsposition im Bereich 2 ist die Darstellung des Geschwindigkeitszeigers in ganzer Länge (12 Uhr Position).

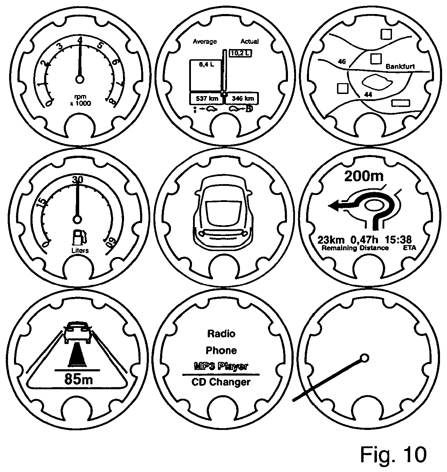

Figur 10 zeigt das Verhalten des Bereiches 2 über die Zeit. Die Auswahl von Informationen 8 in der Interaktionsebene 2 erfolgt mit dem Dreh-Drück-Knopf 9' im und gegen den Uhrzeigersinn. Im aktiven Modus, wenn das Eingabeelement 9 betätigt wird, ist die Interaktionsebene gestalterisch prominent ausgeführt. Im passiven oder im Schlafmodus, welche nach einer definierten Zeitspanne eintritt, wenn keine Interaktion mit dem Eingabeelement 9 stattfindet, wird nur die Interaktionsebene gestalterisch reduziert ausgeführt dargestellt. Diese Eigenschaft ermöglicht eine effiziente Ausnutzung der Darstellungsfläche im ersten Bereich 2 und reduziert die Informationsdichte im Instrument.

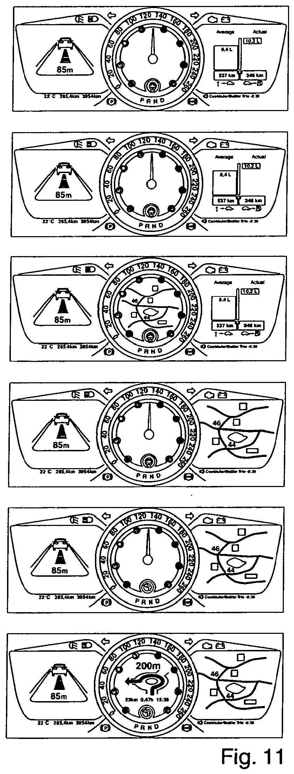

Figur 11 zeigt noch einmal das Verfahren zur Verteilung der Informationen. Eine vorher im ersten Bereich 2 angezeigte Information kann hernach mit dem Verteilungstaster 9" am Eingabeelement nach rechts oder nach links im Kombiinstrument verschoben und abgelegt werden, was aus den oberen beiden Darstellungen gezeigt wird. Die vier unteren Darstellungen zeigen beispielhaft eine Umverteilung von den Informationen in den Ablagebereichen 3. Ausgehend von einer Kombination aus Abstandsanzeige und Geschwindigkeitsdarstellung und Bordcomputer hin zu Abstandszeiger, Navigationspfeilanzeige und Kartendarstellung.

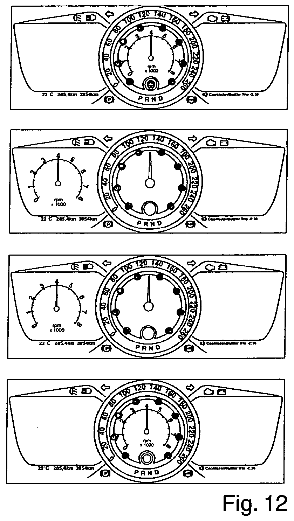

Figur 12 zeigt das Verhalten des Systems zur Verhinderung von Informationsduplikaten. Die zuvor ausgewählte und in den Ablagebereichen 3 verschobene Information wird in dem Moment von der seitlichen Position entfernt, wenn sich der Benutzer entscheidet, die gleiche Funktion im zentralen Bereich 2 anzeigen zu lassen. Aus diesem Zustand heraus kann sich der Fahrer entscheiden, die Informationen mittig zu belassen oder nach rechts oder nach links zu verschieben, respektive abzulegen. Beim Verteilen und dann beim Entfernen von Informationen reagiert das System unmittelbar und ohne Verzögerung auf den Befehl. Bestehende Repräsentationen werden allesamt ausgeblendet und die verschobene Information wird in neuer Position eingeblendet.

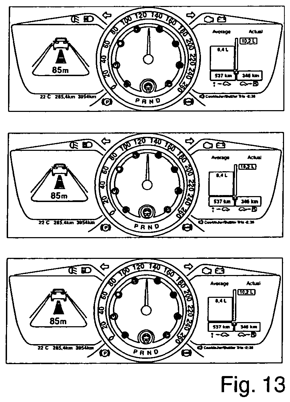

Figur 13 zeigt das Verhalten des Systems beim Versetzen des Focus und anschließend Ausbleiben der Bestätigung. Wenn der Focus in Menüauswahlring 8 sichtbar verändert wird, jedoch im Anschluss die Auswahl nicht bestätigt wird und anschließend den Menüauswahlring in den Schlafmodus zurückfällt, dann fällt die Focusanzeige (6-Uhr-Stellung) im Auswahlringmenü 8 wieder auf das angezeigte Symbol zurück, welches die Funktion im Bereich 2 repräsentiert.

### Bezugszeichenliste:

- 1: Kombiinstrument
- 2: erster Bereich, Interaktionsdisplay
- 3: zweiter Bereich, Ablagebereich
- 4: Fahrzeuginformationen, Routeninformation, Infotainmentinformation
- 5: Wamhinweise
- 6: Fahrzeugkontrollsymbole
- 7: Geschwindigkeitsanzeige
- 8: Auswahlbereich
- 9: Eingabemittel
- 9': Dreh-Drück-Knopf
- 9": Verteiler

## Patentansprüche

1. Kombiinstrument (1) umfassend:
-- einen ersten Bereich (2), wobei der erste Bereich (2) dazu ausgebildet ist, auswählbare Informationen bezüglich Fahrzeugfunktionen (4) und/oder Assistenzfunktionen darzustellen, wobei der erste Bereich (2) ferner als Interaktionsdisplay (2) gestaltet ist und einen interaktiven Auswahlbereich (8) aufweist, wobei der Auswahlbereich (8) Symbole umfasst, mit denen unterschiedliche Funktionen abrufbar sind;
-- ein Eingabemittel (9), welches für eine Auswahl der in dem Interaktionsdisplay (2) anzuzeigenden Information ausgebildet ist, wobei das Eingabemittel einen Dreh-Drück-Knopf (9') umfasst, wobei eines der Symbole durch Drehen und Drücken des Dreh-Drück-Knopfs (9') auswählbar ist;
-- mindestens einen zweien Bereich (3), welcher als Ablagebereich gestaltet ist und dazu ausgebildet ist, die ausgewählte Informationen darzustellen; und
-- mindestens einen Verteiler (9"), welcher dazu ausgebildet ist, bei Betätigung einer Verteilungstaste die im Interaktionsdisplay (2) ausgewählte Information in den mindestens einen Ablagebereich zu verschieben;
**dadurch gekennzeichnet, dass** der Auswahlbereich (8) eine Focusanzeige umfasst, wobei ein Symbol vergrößert und/oder beleuchtet dargestellt wird, was einem Nutzer symbolisiert, dass das Symbol auswählbar ist, wobei bei einem Fehlen einer Bestätigung der Auswahl des vergrößert und/oder beleuchtet dargestellten Symbols die Focusanzeige wieder auf ein vorher angezeigtes Symbol zurück fällt, welches eine im ersten Bereich (2) dargestellte zuvor ausgewählte Informationen bezüglich Fahrzeugfunktionen und/oder Assistenzfunktionen repräsentiert und **dadurch gekennzeichnet, dass** im ersten Bereich (2) dargestellte aktuelle Informationsgehalte durch fahrzeugrelevante Meldungen mit hoher Priorität zumindest für eine gewisse Zeitspanne überschreibbar sind, während dessen im ersten Bereich (2) weitere Aktionen undurchführbar sind, und **dadurch gekennzeichnet, dass** im ersten Bereich (2) zusätzlich eine permanente Darstellung einer Geschwindigkeitsanzeige erfolgt.

2. Kombiinstrument (1) nach Anspruch 1, **dadurch gekennzeichnet, dass** die in dem ersten Bereich (2) darstellbare Information ferner einen Warnhinweis (5) und/oder eine Interaktionsinformation und/oder Informationen über ein Infotainmentsystem umfasst.

3. Kombiinstrument (1) nach einem der voranstehenden Ansprüche, **dadurch gekennzeichnet, dass** das Eingabemittel (9) den Verteiler (9") aufweist.

## Claims

1. Instrument cluster (1) comprising:
-- a first zone (2), wherein the first zone (2) is designed to display selectable information concerning vehicle functions (4) and/or assistance functions, wherein the first zone (2) is arranged, furthermore, as an interactive display (2) and has an interactive selection zone (8), wherein the selection zone (8) comprises symbols by means of which their different functions can be retrieved;
-- an input means (9) which is designed to select the information which is to be displayed in the interactive display (2), wherein the input means comprises a rotary-push knob (9'), wherein one of the symbols can be selected by rotating and depressing the rotary-push knob (9');
-- at least one second zone (3) which is arranged as a storage zone and, in addition, is designed to display the selected information; and
-- at least one distributor (9") which is designed to move the information selected in the interactive display (2) into the at least one storage zone when a distribution button is actuated;
**characterised in that** the selection zone (8) comprises a focussing indicator wherein a symbol is enlarged and/or is illuminated, indicating to a user that the symbol can be selected, wherein, in the event that confirmation of the selection of the enlarged and/or illuminated symbol is not carried out, the focussing indicator reverts to a previously displayed symbol, which represents an item of previously selected information displayed in the first zone (2) concerning vehicle functions and/or assistance functions and **characterised in that** current information content displayed in the first zone (2) can be overwritten by vehicle-related messages with a higher priority at least for a certain time, during which its other operations in the first zone (2) cannot be carried out, and **characterised in that**, additionally, the speed is constantly displayed in the first zone (2).

2. Instrument cluster (1) according to claim 1, **characterised in that** the information displayed in the first zone (2) also comprises a warning notice (5) and/or interactive information and/or information concerning an infotainment system.

3. Instrument cluster (1) according to any one of the preceding claims, **characterised in that** the input means (9) has the distributor (9").

## Revendications

1. Instrument combiné (1) comprenant :
-- une première zone (2), où la première zone (2) est conçue pour représenter des informations sélectionnables en termes de fonctions véhicule (4) et/ou de fonctions d'assistance, où la première zone (2) est conçue en outre comme affichage interactif (2) et présente une zone de sélection interactive (8), où la zone de sélection (8) comprend des symboles avec lesquelles différents fonctions sont évocables ;
-- un moyen de saisie (9), qui est conçu pour sélectionner une information à afficher à l'affichage interactif (2), où le moyen de saisie comprend un bouton rotatif à pression (9'), où l'un des symboles est sélectionnable par rotation et pression du bouton rotatif à pression (9') ;
-- au moins une seconde zone (3), qui est prévue comme zone de stockage et conçue pour représenter les informations sélectionnées ;
-- au moins un distributeur (9"), qui est prévu pour repousser dans ladite au moins une zone de stockage l'information sélectionnée à l'affichage interactif (2) par actionnement d'une touche de distribution ;
**caractérisé en ce que** la zone de sélection (8) contient un affichage à focalisation, permettant de représenter un symbole de façon agrandie et/ou éclairée, symbolisant pour un utilisateur que le symbole est sélectionnable, où en cas d'échec d'actionnement de la sélection du symbole agrandi et/ou éclairé, l'affichage à focalisation revient à un symbole affiché préalablement, qui représente des informations sélectionnées au préalable et présentées dans la première zone (2), en termes de fonctions véhicule et/ou de fonctions d'assistance et **caractérisé en ce que** les contenus d'informations courants représentés dans la première zone (2) peuvent être écrasées par des messages importants pour le véhicule, avec une priorité élevée, au moins pendant un certain laps de temps, tandis que toute autre action est bloquée dans la première zone (2), et **caractérisé en ce que** dans la première zone (2) l'affichage de vitesse est représenté en outre en permanence.

2. Instrument combiné (1) selon la revendication 1, **caractérisé en ce que** l'information pouvant être représentée dans la première zone (2) contient en outre un conseil d'avertissement (5) et/ou une information d'interaction et/ou des informations concernant un système d'infotainment.

3. Instrument combiné (1) selon l'une des revendications précédentes, **caractérisé en ce que** le moyen de saisie (9) présente le distributeur (9").
